# FASCICULE DE BREVET EUROPEEN

(11) **EP 3 958 374 B1**
(45) Date de publication et mention de la délivrance du brevet: **03.12.2025**
(21) Numéro de dépôt: 21183231.6
(22) Date de dépôt: 01.07.2021
(51) Int. Cl.: H01M 10/42, H01M 50/449, H01M 50/583

(54) **CELLULE DE STOCKAGE D'ÉNERGIE COMPRENANT UN SÉPARATEUR COMPOSITE POUR INITIER UN COURT-CIRCUIT**
ENERGIESPEICHERZELLE MIT VERBUNDSEPARATOR ZUR AUSLÖSUNG EINES KURZSCHLUSSES
ENERGY STORAGE CELL COMPRISING A COMPOSITE SEPARATOR FOR ACTIVATING A SHORT-CIRCUIT

(30) Priorité: 17.08.2020 FR 2008538
(43) Date de publication de la demande: 23.02.2022
(73) Titulaire: Ampere SAS, 92100 Boulogne-Billancourt (FR)
(72) Inventeur: DEBART, Aurelie, 80260 Pierregot (FR); JIMENEZ-GORDON, Isabel, 75015 Paris (FR); RAT, Natalie, 75015 PARIS (FR); LEPOIVRE, Florent, 75014 paris (FR)
(74) Mandataire: Renault Group

(56) Documents cités:
- EP-A1- 3 333 956
- US-A1- 2013 127 473
- US-A1- 2018 053 973

## Description

### Domaine Technique de l'invention

L'invention concerne une cellule de stockage d'énergie. L'invention porte aussi sur une batterie comprenant une telle cellule de stockage d'énergie. L'invention porte encore sur un véhicule automobile comprenant une telle batterie ou une telle cellule de stockage d'énergie. L'invention porte enfin sur un procédé de test d'une cellule de stockage d'énergie.

### Etat de la technique antérieure

Les batteries des véhicules automobiles subissent de nombreux tests pour s'assurer de leur robustesse et de leur fiabilité dans différentes conditions d'utilisation. On connaît par exemple des méthodes reposant sur l'application d'une pression mécanique sur la cellule, sur un ajout d'impuretés au sein d'une cellule, ou encore sur des simulations numériques.

Le brevet US9214703B2 présente une méthode de test de batterie s'appuyant sur l'ajout d'une résistance électrique chauffante capable de produire un échauffement localisé lorsqu'elle est parcourue par un courant électrique. Ce brevet propose d'insérer cette résistance chauffante soit entre la cathode et le séparateur de la batterie, soit entre le séparateur et l'anode. La circulation d'un courant électrique dans la résistance chauffante conduit à un échauffement local puis à la combustion de la batterie.

Le mode de dégradation d'une batterie équipé d'une telle résistance chauffante est toutefois très différent des modes de dégradation des batteries embarquées dans les véhicules automobiles. De plus, une telle batterie de test ne peut pas être pleinement chargée en raison de l'écran formé entre l'anode et la cathode par la résistance chauffante. Les résultats d'essais obtenus avec de telles batteries sont donc faiblement représentatifs des performances réelles des batteries utilisées dans les véhicules automobiles.

Le document US2018/053973A1 résout partiellement le problème et peut être amélioré.

### Présentation de l'invention

Le but de l'invention est de fournir une cellule de stockage d'énergie remédiant aux inconvénients ci-dessus et améliorant les cellules de stockage d'énergie connues de l'art antérieur.

Plus précisément, un premier objet de l'invention est de fournir une cellule de stockage d'énergie permettant de réaliser des essais de validation hautement représentatifs du fonctionnement de cellules de stockage d'énergie fabriquées en série.

Un second objet de l'invention est une cellule de stockage d'énergie permettant de simuler un possible court-circuit entre l'anode et la cathode tel qu'il pourrait se produire dans une cellule de stockage d'énergie en cas d'un possible défaut de fabrication.

### Résumé de l'invention

L'invention se rapporte à une cellule de stockage d'énergie comprenant une anode, une cathode et un séparateur poreux agencé entre l'anode et la cathode, le séparateur comprenant une première couche de matériau isolant du côté de l'anode, une deuxième couche de matériau isolant du côté de la cathode et une grille métallique agencée entre la première couche et la deuxième couche, la grille métallique comprenant deux bornes électriques et un rétrécissement de section destiné à former un point chaud lorsqu'un courant électrique circule entre les deux bornes électriques.

La grille peut s'étendre parallèlement à un plan. Le rétrécissement de section peut être positionné sensiblement au centre de la grille.

La grille peut être noyée dans une épaisseur du séparateur.

La grille peut former une électrode de référence de la cellule.

La grille peut être sans contact avec l'anode et sans contact avec la cathode.

La grille peut comprendre une épaisseur comprise entre 5 µm et 100 µm inclus.

La cellule de stockage d'énergie peut être un accumulateur de type lithium-ion, ou de type sodium-ion, ou de type lithium-soufre. Ledit matériau isolant peut être un polymère, notamment il peut comprendre du polypropylène et/ou du polyéthylène.

La cellule de stockage d'énergie peut comprendre une pluralité d'anodes, de séparateurs et de cathodes empilés, tout ou partie des séparateurs comprenant :
- une première couche de matériau isolant du côté d'une anode adjacente au séparateur,
- une deuxième couche de matériau isolant du côté d'une cathode adjacente au séparateur et
- une grille métallique agencée entre la première couche et la deuxième couche, la grille métallique comprenant deux bornes électriques et un rétrécissement de section destiné à former un point chaud lorsqu'un courant électrique circule entre les deux bornes électriques.

L'invention se rapporte également à un procédé de test d'une cellule de stockage d'énergie tel que défini précédemment, le procédé de test comprenant une étape de circulation d'un courant électrique entre les deux bornes électriques de la grille, puis une étape de dégradation du matériau isolant autour du rétrécissement de section de la grille, puis une étape de court-circuit entre l'anode et la cathode de la cellule.

L'invention se rapporte également à une batterie pour véhicule automobile comprenant au moins une cellule de stockage d'énergie telle que définie précédemment.

L'invention se rapporte également à un véhicule automobile comprenant une batterie telle que définie précédemment et/ou au moins une cellule de stockage d'énergie telle que définie précédemment.

### Présentation des figures

Ces objets, caractéristiques et avantages de la présente invention seront exposés en détail dans la description suivante d'un mode de réalisation particulier fait à titre non-limitatif en relation avec les figures jointes parmi lesquelles :
[Fig. 1] La figure 1 est une première vue schématique en coupe, selon un plan XY, d'une cellule de stockage d'énergie selon un mode de réalisation de l'invention.
[Fig. 2] La figure 2 est une deuxième vue schématique en coupe, selon un plan YZ perpendiculaire au plan XY, de la cellule.
[Fig. 3] La figure 3 est une vue schématique en perspective d'un séparateur de la cellule.

### Description détaillée

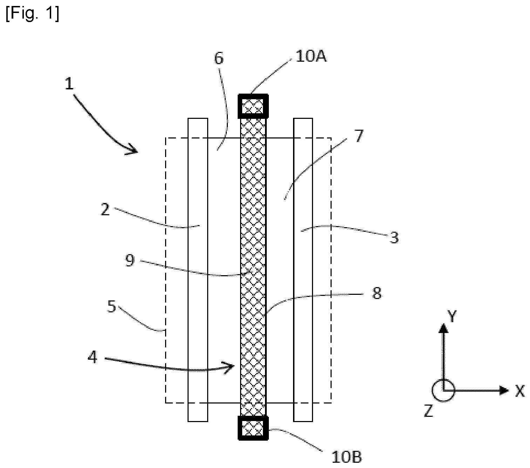

La figure 1 illustre schématiquement une cellule 1 de stockage d'énergie selon un mode de réalisation de l'invention. La cellule 1, que l'on pourrait également dénommer "accumulateur" ou "pile rechargeable", est apte à produire de l'énergie électrique par une réaction chimique réversible. La cellule 1 peut donc être rechargée et réutilisée. La cellule 1 peut être une cellule d'essai, c'est-à-dire une cellule destinée à réaliser un ou plusieurs tests de validation pour s'assurer qu'elle convient pour une utilisation dans un véhicule automobile. La cellule 1 peut également être intégrée à une batterie destinée à fournir de l'énergie électrique à un moteur électrique. Une telle batterie peut alors comprendre plusieurs cellules identiques reliées entre elles en série et/ou en parallèle. Cette cellule 1 ou cette batterie peut également être embarquée dans un véhicule automobile en vue de tests ou bien en vue d'une utilisation ordinaire du véhicule.

La cellule 1 comprend une anode 2, une cathode 3 et un séparateur 4 poreux agencé entre l'anode 2 et la cathode 3. Le séparateur 4 permet d'isoler électriquement l'anode 2 de la cathode 3 afin d'éviter un court-circuit entre l'anode et la cathode. La cellule comprend également un électrolyte liquide capable de véhiculer des ions entre l'anode et la cathode. La porosité du séparateur permet la libre circulation de l'électrolyte entre l'anode et la cathode. La cellule comprend également une enveloppe 5 étanche contenant l'anode 2, la cathode 3, le séparateur 4 et l'électrolyte.

Le séparateur comprend une première couche 6 de matériau isolant du côté de l'anode 2, une deuxième couche 7 de matériau isolant du côté de la cathode 3 et une grille 8 métallique agencée entre la première couche 6 et la deuxième couche 7. Autrement dit, la grille 8 est prise en sandwich entre les deux couches 6 et 7. Le matériau isolant est un matériau non conducteur d'électricité. La grille 8 comprend un réseau de mailles 8 interconnectées. La grille 8 peut être par exemple un maillage de fils métalliques, une structure tressée ou encore une structure treillis. Selon un autre exemple, la grille 8 pourrait être obtenue à partir d'une feuille métallique ajourée par découpe. La grille 8 est donc parsemée d'ouvertures au travers desquelles des ions peuvent librement circuler. Selon une autre variante de réalisation la grille peut comprendre une structure non tissée. Elle peut, par exemple, être obtenue avec des fibres métalliques aléatoirement disposées au moment de sa fabrication

La cellule peut être par exemple un accumulateur de type lithium-ion, ou de type sodium-ion, ou encore de type lithium-soufre. En variante, tout autre matériau pourrait être envisagé pour la réalisation de l'anode et/ou de la cathode. Le matériau isolant formant le séparateur peut être un polymère. Il peut par exemple comprendre du polypropylène et/ou du polyéthylène.

Comme visible sur la figure 1, l'anode, la cathode et le séparateur peuvent s'étendre globalement parallèlement à un plan YZ défini par les axes Y et Z. L'anode, la cathode et le séparateur peuvent s'inscrire dans une enveloppe de forme plane et globalement rectangulaire. En variante, l'invention pourrait être également appliquée à une cellule de forme différente comme par exemple une cellule de forme globalement cylindrique dans laquelle l'anode la cathode et le séparateur sont enroulées en spirale.

La grille est sans contact avec l'anode et sans contact avec la cathode. Notamment la grille peut être noyée dans l'épaisseur du séparateur, c'est-à-dire que le matériau isolant du séparateur peut s'étendre à l'intérieur des mailles 9 de la grille 8. Ainsi le matériau isolant de la première couche 6 est directement au contact avec le matériau isolant de la deuxième couche 7 au travers des mailles 9. Un tel séparateur pourrait par exemple être obtenu par surmoulage de la grille avec le matériau isolant. En variante, les deux couches 6 et 7 peuvent former deux feuilles s'étendant parallèlement à la grille sans pénétrer à l'intérieur des mailles 9 de la grille. La grille 8 peut comprendre une épaisseur comprise entre 5 µm et 100 µm inclus. De préférence la grille 8 peut comprendre une épaisseur comprise entre 10 µm et 50 µm. De préférence encore, l'épaisseur de la grille peut être de l'ordre de 25 µm. La grille 8 peut s'étendre sensiblement à miépaisseur du séparateur 4.

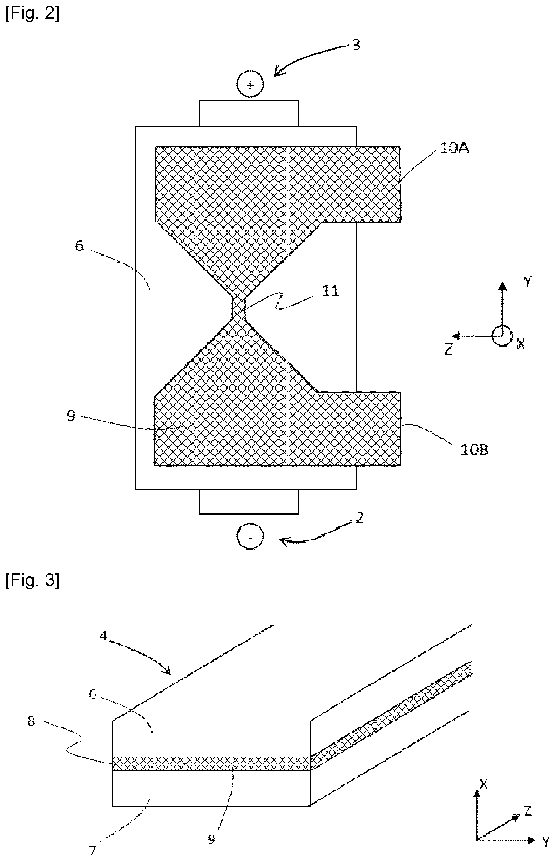

La figure 2 illustre la cellule 1 en coupe dans le plan ZY, perpendiculaire au plan de coupe de la figure 1 (les axes X, Y et Z formant un repère orthogonal). La grille 8 comprend deux bornes électriques 10A, 10B pour faire circuler un courant électrique à travers la grille. Avantageusement, ces deux bornes électriques peuvent être positionnées sensiblement au niveau de deux bords opposés de la grille, de sorte que le courant électrique parcourt sensiblement toute la grille lorsqu'il circule d'une borne à l'autre. Comme cela apparait sur la figure 2, les deux bornes électriques 10A, 10B peuvent être positionnées à deux extrémités opposées d'un même bord. Elles pourraient aussi être positionnées au niveau de deux bords adjacents de la grille 8. Les deux bornes électriques 10A, 10B peuvent ressortir de l'enveloppe 5 afin d'être branchées à une source de courant. Avantageusement, la cellule 1 comprend des interfaces étanches ou quasi-étanches au niveau des bornes électriques 10A, 10B pour éviter une fuite d'électrolyte.

La grille 8 comprend également un rétrécissement de section 11 destiné à former un point chaud lorsqu'un courant électrique circule entre les deux bornes électriques. Le rétrécissement de section ou "amincissement" peut être positionné sensiblement au centre de la grille 8. Le rétrécissement de section 11 peut par exemple être positionné en vis-à-vis du centre du rectangle formant l'enveloppe de l'anode et/ou de la cathode. Par exemple, la grille 8 peut comprendre une forme en X, le rétrécissement de section 11 étant positionné au centre du X. Les bornes électriques 10A, 10B peuvent alors être positionnés chacune à une extrémité d'une branche du X. En variante, la restriction de section pourrait être positionnée dans une zone différente de la grille en adaptant la forme de cette dernière. Par exemple, dans le cas de cellules de forme allongée, plusieurs positionnements du rétrécissement de section peuvent être proposés et testés. Sur la figure 2, on observe que la grille recouvre une grande partie de la surface des électrodes. En pratique, la grille pourrait avoir une section différente, notamment une section du même ordre de grandeur que celle qu'elle présente au niveau des bornes 10A et 10B, voire même plus petite.

Le rétrécissement de section 11 forme un goulet d'étranglement pour le courant circulant entre les deux bornes électriques 10A, 10B. Lorsqu'on fait circuler un courant électrique entre les deux bornes 10A, 10B, l'intensité du courant électrique devient plus importante au niveau du rétrécissement de section 11, ce qui conduit à un échauffement au niveau de ce rétrécissement de section par effet joule. L'échauffement conduit à une dégradation du séparateur, notamment à la fonte du matériau isolant formant le séparateur, autour du rétrécissement de section. L'anode et la cathode entrent alors en contact ce qui provoque un court-circuit de la cellule. On peut alors observer les conséquences d'un tel court-circuit sur la cellule 1.

La grille 8 peut former une électrode de référence, utile pour mesurer un potentiel électrique de l'électrolyte. Ainsi, la grille 8 peut remplir à la fois une fonction de fusible provoquant un court-circuit et une fonction d'interface de mesure permettant d'observer le fonctionnement de la cellule 1. Dans ce cas, la grille est préférentiellement fonctionnalisée, c'est-à-dire recouverte d'un matériau qui a un potentiel fixe, par exemple un matériau d'électrode (par exemple LiFePO4 ou Li4Ti5012) ou même une fine couche de lithium. On veille alors à ce que ce revêtement ne bouche pas les trous de la grille.

Avantageusement, l'utilisation d'une grille 8 métallique est peu intrusive et ne perturbe pas le transfert des ions entre l'anode et la cathode car les ions peuvent circuler librement au travers des mailles 9 de la grille 8. Autrement dit, la grille 8 ne forme pas une barrière ou un obstacle pour le transfert des ions. L'ensemble de la surface d'échange entre l'anode et la cathode peut être efficacement utilisée et on parvient à charger et/ou décharger la cellule 1. Le fonctionnement de la cellule 1 est donc très proche du fonctionnement d'une cellule identique ne comportant pas la grille 8. Grâce à l'invention, on parvient donc à simuler la formation d'un court-circuit au sein d'une cellule sans en modifier la structure ou le mode naturel de fonctionnement. Les résultats d'essais sont donc très représentatifs d'un court-circuit se produisant dans une cellule dépourvue de grille 8, en condition d'utilisation normale. On peut donc réaliser des essais de validation de grande qualité pour homologuer la cellule.

La cellule 1 peut comprendre un empilement d'un nombre quelconque d'anodes, de cathode et de séparateurs. Notamment, cet empilement peut comprendre une alternance d'anodes et de cathodes séparées entre eux par des séparateurs. Tout ou partie des séparateurs de la cellule peut comprendre une première couche de matériau isolant du côté d'une anode adjacente au séparateur, une deuxième couche de matériau isolant du côté d'une cathode adjacente au séparateur et une grille métallique agencée entre la première couche et la deuxième couche, tels que décrites précédemment. Une telle cellule peut être utilisée par exemple pour stocker de l'énergie dans un véhicule automobile.

Avantageusement, la cellule selon l'invention pourra également être destinée à être utilisée dans d'autres système qu'un véhicule automobile, par exemple dans un autre équipement de transport ou dans un équipement portable tel qu'un téléphone ou un ordinateur.

## Revendications

1. Cellule (1) de stockage d'énergie, **caractérisée en ce qu'**elle comprend une anode (2), une cathode (3) et un séparateur (4) poreux agencé entre l'anode et la cathode, le séparateur comprenant une première couche (6) de matériau isolant du côté de l'anode, une deuxième couche (7) de matériau isolant du côté de la cathode et une grille (8) métallique agencée entre la première couche et la deuxième couche, la grille métallique comprenant deux bornes électriques (10A, 10B) et un rétrécissement de section (11) destiné à former un point chaud lorsqu'un courant électrique circule entre les deux bornes électriques.

2. Cellule (1) de stockage d'énergie selon la revendication précédente, **caractérisé en ce que** la grille (8) s'étend parallèlement à un plan et/ou **en ce que** le rétrécissement de section (11) est positionné sensiblement au centre de la grille.

3. Cellule (1) de stockage d'énergie selon l'une des revendications précédentes, **caractérisé en ce que** la grille (8) est noyée dans une épaisseur du séparateur (4).

4. Cellule (1) de stockage d'énergie selon l'une des revendications précédentes, **caractérisé en ce que** la grille (8) forme une électrode de référence de la cellule.

5. Cellule (1) de stockage d'énergie selon l'une des revendications précédentes, **caractérisé en ce que** la grille (8) est sans contact avec l'anode (2) et sans contact avec la cathode (3).

6. Cellule (1) de stockage d'énergie selon l'une des revendications précédentes, **caractérisé en ce que** la grille (8) comprend une épaisseur comprise entre 5 µm et 100 µm inclus.

7. Cellule (1) de stockage d'énergie selon l'une des revendications précédentes, **caractérisé en ce qu'**elle est un accumulateur de type lithium-ion, ou de type sodium-ion, ou de type lithium-soufre,
et/ou **en ce que** ledit matériau isolant est un polymère, notamment **en ce qu'**il comprend du polypropylène et/ou du polyéthylène.

8. Cellule (1) de stockage d'énergie selon l'une des revendications précédentes, **caractérisé en ce qu'**elle comprend une pluralité d'anodes (2), de séparateurs (4) et de cathodes (3) empilés, tout ou partie des séparateurs comprenant :
- une première couche (6) de matériau isolant du côté d'une anode (2) adjacente au séparateur,
- une deuxième couche (7) de matériau isolant du côté d'une cathode (3) adjacente au séparateur et
- une grille (8) métallique agencée entre la première couche et la deuxième couche, la grille métallique comprenant deux bornes électriques (10A, 10B) et un rétrécissement de section (11) destiné à former un point chaud lorsqu'un courant électrique circule entre les deux bornes électriques.

9. Procédé de test d'une cellule (1) de stockage d'énergie selon l'une des revendications précédentes, **caractérisé en ce qu'**il comprend une étape de circulation d'un courant électrique entre les deux bornes électriques (10A, 10B) de la grille (8), puis une étape de dégradation du matériau isolant autour du rétrécissement de section (11) de la grille, puis une étape de court-circuit entre l'anode (2) et la cathode (3) de la cellule.

10. Batterie pour véhicule automobile, **caractérisée en ce qu'**elle comprend au moins une cellule (1) de stockage d'énergie selon l'une des revendications 1 à 8.

11. Véhicule automobile, **caractérisé en ce qu'**il comprend une batterie selon la revendication précédente et/ou au moins une cellule (1) de stockage d'énergie selon l'une des revendications 1 à 8.

## Patentansprüche

1. Energiespeicherzelle (1), **dadurch gekennzeichnet, dass** sie eine Anode (2), eine Kathode (3) und einen porösen Separator (4) umfasst, der zwischen der Anode und der Kathode angeordnet ist, wobei der Separator eine erste Schicht (6) aus Isolationsmaterial auf der Seite der Anode, eine zweite Schicht (7) aus Isolationsmaterial auf der Seite der Kathode und ein Metallgitter (8), das zwischen der ersten Schicht und der zweiten Schicht angeordnet ist, umfasst, wobei das Metallgitter zwei elektrische Anschlüsse (10A, 10B) und eine Querschnittsverjüngung (11) umfasst, die einen heißen Punkt bilden soll, wenn ein elektrischer Strom zwischen den zwei elektrischen Anschlüssen fließt.

2. Energiespeicherzelle (1) nach dem vorhergehenden Anspruch, **dadurch gekennzeichnet, dass** sich das Gitter (8) parallel zu einer Ebene erstreckt und/oder dass die Querschnittsverjüngung (11) im Wesentlichen im Zentrum des Gitters positioniert ist.

3. Energiespeicherzelle (1) nach einem der vorhergehenden Ansprüche, **dadurch gekennzeichnet, dass** das Gitter (8) in eine Dicke des Separators (4) eingebettet ist.

4. Energiespeicherzelle (1) nach einem der vorhergehenden Ansprüche, **dadurch gekennzeichnet, dass** das Gitter (8) eine Referenzelektrode der Zelle bildet.

5. Energiespeicherzelle (1) nach einem der vorhergehenden Ansprüche, **dadurch gekennzeichnet, dass** das Gitter (8) ohne Kontakt mit der Anode (2) und ohne Kontakt mit der Kathode (3) ist.

6. Energiespeicherzelle (1) nach einem der vorhergehenden Ansprüche, **dadurch gekennzeichnet, dass** das Gitter (8) eine Dicke zwischen einschließlich 5 µm und einschließlich 100 µm umfasst.

7. Energiespeicherzelle (1) nach einem der vorhergehenden Ansprüche, **dadurch gekennzeichnet, dass** sie ein Akkumulator des Lithiumionentyps oder des Natriumionentyps oder des Lithiumschwefeltyps ist, und/oder dass das Isolationsmaterial ein Polymer ist und insbesondere Polypropylen und/oder Polyethylen umfasst.

8. Energiespeicherzelle (1) nach einem der vorhergehenden Ansprüche, **dadurch gekennzeichnet, dass** sie mehrere gestapelte Anoden (2), Separatoren (4) und Kathoden (3) umfasst, wobei alle oder ein Teil der Separatoren Folgendes umfassen:
- eine erste Schicht (6) aus Isolationsmaterial auf der Seite einer Anode (2), die zum Separator benachbart ist,
- eine zweite Schicht (7) aus Isolationsmaterial auf der Seite einer Kathode (3), die zum Separator benachbart ist, und
- ein Metallgitter (8), das zwischen der ersten Schicht und der zweiten Schicht angeordnet ist, wobei das Metallgitter zwei elektrische Anschlüsse (10A, 10B) und eine Querschnittsverjüngung (11) umfasst, die einen heißen Punkt bilden soll, wenn zwischen den zwei elektrischen Anschlüssen ein elektrischer Strom fließt.

9. Verfahren zum Testen einer Energiespeicherzelle (1) nach einem der vorhergehenden Ansprüche, **dadurch gekennzeichnet, dass** es einen Schritt für den Fluss eines elektrischen Stroms zwischen den zwei elektrischen Anschlüssen (10A, 10B) des Gitters (8), dann einen Schritt zur Verschlechterung des Isolationsmaterials um die Querschnittsverjüngung (11) des Gitters und dann einen Schritt für einen Kurzschluss zwischen der Anode (2) und der Kathode (3) der Zelle umfasst.

10. Batterie für ein Kraftfahrzeug, **dadurch gekennzeichnet, dass** sie mindestens eine Energiespeicherzelle (1) nach einem der Ansprüche 1 bis 8 umfasst.

11. Kraftfahrzeug, **dadurch gekennzeichnet, dass** es eine Batterie nach dem vorhergehenden Anspruch und/oder mindestens eine Energiespeicherzelle (1) nach einem der Ansprüche 1 bis 8 umfasst.

## Claims

1. Energy storage cell (1), **characterized in that** it comprises an anode (2), a cathode (3) and a porous separator (4) arranged between the anode and the cathode, the separator comprising a first layer (6) of insulating material in the vicinity of the anode, a second layer (7) of insulating material in the vicinity of the cathode and a metal grid (8) arranged between the first layer and the second layer, the metal grid comprising two electrical terminals (10A, 10B) and a cross-sectional narrowing (11) intended to form a hot spot when an electric current flows between the two electrical terminals.

2. Energy storage cell (1) according to the preceding claim, **characterized in that** the grid (8) extends parallel to a plane and/or **in that** the cross-sectional narrowing (11) is positioned substantially in the centre of the grid.

3. Energy storage cell (1) according to either of the preceding claims, **characterized in that** the grid (8) is embedded in a thickness of the separator (4).

4. Energy storage cell (1) according to one of the preceding claims, **characterized in that** the grid (8) forms a reference electrode of the cell.

5. Energy storage cell (1) according to one of the preceding claims, **characterized in that** the grid (8) has no contact with the anode (2) and no contact with the cathode (3).

6. Energy storage cell (1) according to one of the preceding claims, **characterized in that** the grid (8) comprises a thickness of between 5 µm and 100 µm inclusive.

7. Energy storage cell (1) according to one of the preceding claims, **characterized in that** it is a lithium-ion or sodium-ion or lithium-sulfur accumulator,
and/or **in that** said insulating material is a polymer, notably **in that** it comprises polypropylene and/or polyethylene.

8. Energy storage cell (1) according to one of the preceding claims, **characterized in that** it comprises a plurality of stacked cathodes (3), anodes (2) and separators (4), all or some of the separators comprising:
- a first layer (6) of insulating material in the vicinity of an anode (2) which is adjacent to the separator,
- a second layer (7) of insulating material in the vicinity of a cathode (3) which is adjacent to the separator and
- a metal grid (8) arranged between the first layer and the second layer, the metal grid comprising two electrical terminals (10A, 10B) and a cross-sectional narrowing (11) intended to form a hot spot when an electric current flows between the two electrical terminals.

9. Method for testing an energy storage cell (1) according to one of the preceding claims, **characterized in that** it comprises a step of an electric current flowing between the two electrical terminals (10A, 10B) of the grid (8), then a step of the insulating material around the cross-sectional narrowing (11) of the grid degrading, then a step of a short circuit between the anode (2) and the cathode (3) of the cell.

10. Battery for a motor vehicle, **characterized in that** it comprises at least one energy storage cell (1) according to one of Claims 1 to 8.

11. Motor vehicle, **characterized in that** it comprises a battery according to the preceding claim and/or at least one energy storage cell (1) according to one of Claims 1 to 8.
